## Europäisches Patentamt
## European Patent Office
## Office européen des brevets

(19)

(11) Veröffentlichungsnummer: **0 181 490**
**B1**

(12) # EUROPÄISCHE PATENTSCHRIFT

(45) Veröffentlichungstag der Patentschrift:
20.07.88

(51) Int. Cl.⁴: **B 25 J 9/04,** F 16 H 21/04

(21) Anmeldenummer: **85112717.5**

(22) Anmeldetag: **08.10.85**

(54) Vorrichtung zur Erzeugung von kartesischen Horizontal- und Vertikalbewegungen.

<table>
<tr><td>

(30) Priorität: **13.10.84 DE 3437590**

(43) Veröffentlichungstag der Anmeldung:
**21.05.86 Patentblatt 86/21**

(45) Bekanntmachung des Hinweises auf die Patenterteilung:
**20.07.88 Patentblatt 88/29**

(84) Benannte Vertragsstaaten:
**AT BE CH DE FR GB IT LI LU NL SE**

(56) Entgegenhaltungen:
**EP-A-0 158 722**
**CH-A-380 469**
**DE-A-3 410 515**
**FR-A-1 385 438**
**FR-A-2 406 132**
**GB-A-903 116**
**SU-A-779 065**
**US-A-3 291 431**

</td><td>

(73) Patentinhaber: **Schwarz, Friedhelm, Hornstrasse 19,
D-4390 Gladbeck (DE)**

(72) Erfinder: **Schwarz, Friedhelm, Hornstrasse 19,
D-4390 Gladbeck (DE)**

(74) Vertreter: **Radünz, Ingo, Dipl.- Ing., Eduard-
Schloemann- Strasse 47, D-4000 Düsseldorf 1 (DE)**

</td></tr>
</table>

## Beschreibung

Die Erfindung betrifft eine Vorrichtung zur Erzeugung von kartesischen Horizontal- und Vertikalbewegungen bei Handhabungsgeräten, Robotern und Chargiermanipulatoren.

Eine solche Vorrichtung ist Gegenstand der älteren deutschen Patentanmeldung DE-A-3 410 515.8 (entspricht EP-A-158 722, die einen Stand der Technik nach Art 54 (3), EPÜ, darstellt). Bei dieser Vorrichtung sind die beiden Hebelparallelogramme über ein Zwischenstück und ein Synchronisationsgestänge miteinander gekoppelt. Parallel zu dem ersten Hebelparallelogramm ist ein Zusatzhebel angeordnet, an den über einen Winkelhebel ein Hubantrieb und über ein Ausgleichsgestänge ein Horizontalantrieb angreifen. Mit dieser Vorrichtung ist es möglich, eine höhenkonstante horizontale und eine geradlinig vertikale Bewegung zu erzielen.

Der Erfindung liegt die Aufgabe zugrunde, Vorrichtung derart zu gestalten, daß der Antrieb vereinfacht wird und daß die Erzeugung von kartesischen Horizontal- und Vertikalbewegungen möglich ist.

Diese Aufgabe wird durch Merkmale des Anspruches 1 gelöst. Vorteilhafte Ausgestaltungen der Erfindung sind in den Unteransprüchen enthalten

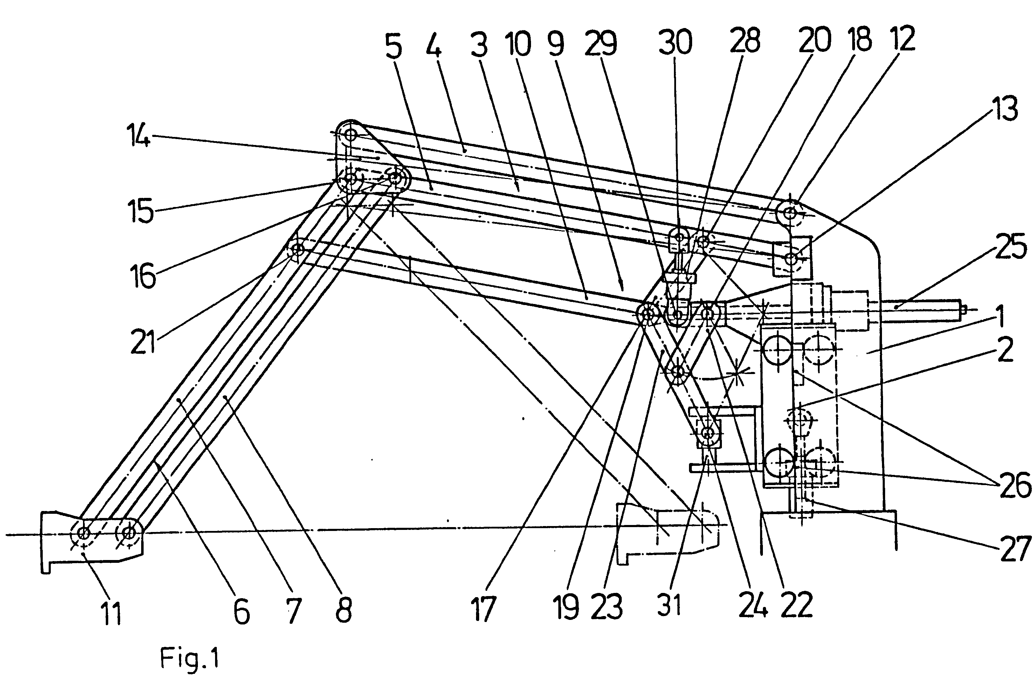

Bei dieser Vorrichtung werden über den vertikal verschiebbaren Kreuzschlitten in Verbindung mit dem Doppellenkergestänge die kartesischen Horizontal- und Vertikalbewegungen des Werkzeugträgers eingeleitet. Dabei werden die Horizontalbewegungen durch die Auslenkung nur eines Armes bewirkt, wodurch die Anzahl der Elemente des Knickarmsystems verringert und damit das System vereinfacht wird. Ein Ausführungsbeispiel der Erfindung ist in der Zeichnung dargestellt und wird im folgenden näher erläutert. Die Fig. 1 bis 3 zeigen in Seitenansicht schematisch eine Vorrichtung gemäß der Erfindung in verschiedenen Arbeitsstellungen.

Die Vorrichtung besteht aus einem Grundrahmen 1, an dem ein Knickarmsystem befestigt ist, das an seinem freien Ende einen Werkzeug träger 11 trägt. Das Knickarmsystem ist so ausgebildet und wird so angetrieben, daß der Werkzeugträger 11 kartesische Horizontal- und Vertikalbewegungen ausführen kann.

Das Knickarmsystem besteht aus zwei Hebelparallelogrammen 3, 6 und einem Antriebsparallelogramm 9, die nach dem Pantographenprinzip zusammengesetzt sind. Das erste Hebelparallelogramm 3 enthält zwei parallele Hebel 4, 5, die in den Punkten 12, 13 drehbar an dem Grundrahmen 1 gehalten sind. Die anderen Enden der Hebel 4, 5 des ersten Hebelparallelogramms 3 sind mit einem Herzstück 14 verbunden.

Das zweite Hebelparallelogramm 6 enthält zwei parallele Hebel 7, 8, die an einem Ende den Werkzeugträger 11 tragen. Die anderen Enden der Hebel 7, 8 greifen in den Punkten 15, 16 an das Herzstück 14 an, wodurch die beiden Hebelparallelogramme 3, 6 miteinander gekoppelt sind.

Das Antriebsparallelogramm 9 umfaßt zwei Stangen 10, 17, die in einem Punkt 19 miteinander verbunden sind. Dieser Punkt 19 dient als Angriffspunkt der horizontalen und vertikalen Verschiebekraft. Die Stange 10 ist in dem Punkt 21 mit dem Hebel 7 des zweiten Hebelparallelogramms 6, und die Stange 17 ist in dem Punkt 20 mit dem Hebel 5 des ersten Hebelparallelogramms 3 verbunden. Die so zwischen den Punkten 15, 20 auf dem Hebel 5 und zwischen den Punkten 15, 21 auf dem Hebel 7 gebildeten Abschnitte stellen in Verbindung mit den Stangen 10, 17 das Antriebsparallelogramm 9 dar. Dabei stehen die Länge der Abschnitte auf den Hebeln 5, 7, die Länge der Stangen 10, 17 und die horizontale Verschiebelänge in einem bestimmten Verhältnis zueinander.

Der Antrieb des Knickarmsystems erfolgt über einen Kreuzschlitten 2. Dieser Kreuzschlitten 2 ist in vertikaler Richtung in dem Grundrahmen 1 an Gleit- oder Rollenführungen 26 geführt, die ein vertikales Linearführungssystem darstellen. Der Kreuzschlitten 2 ist mit einem Hubantrieb 27 versehen, der z. B. aus einem Hydraulikzylinder, einem Spindelantrieb oder ähnlichem besteht. Der Kreuzschlitten 2 enthält weiterhin einen Horizontalantrieb 25.

Der Kreuzschlitten 2 ist mit einem als Doppellenkergestänge ausgebildeten, horizontalen Führungsgestänge verbunden. Dieses Führungsgestänge besteht aus zwei in einem Gelenk miteinander verbundenen Lenkern 22, 23. Das Gelenk teilt den Lenker 23 in zwei Abschnitte, die vorzugsweise unter sich gleich sind und der Länge des Lenkers 22 entsprechen. Der Lenker 22 ist in dem Punkt 18 drehbar mit dem Kreuzschlitten 2 gekoppelt, Der Lenker 23 ist drehbar in dem Punkt 19 des Antriebsparallelogramms 9 gehalten und mit dem Horizontalan trieb 25 verbunden. Der an dem unteren Ende des Lenkers 23 liegende Punkt 24 ist gleitend in einer kleineren Vertikalführung 31 geführt. Diese Vertikalführung 31 ist mit dem Kreuzschlitten 2 fest verbunden.

Zum Ausgleich des Eigengewichtes der Hebelparallelogramme 3, 6 des Antriebsparallelogramms 9 und des Werkzeugträgers 11 ist ein Ausgleichszylinder 28 vorgesehen. Dieser Ausgleichszylinder 28 ist zwischen einem auf dem Kreuzschlitten 2 liegenden Punkt 29 und einem senkrecht darüber auf dem Hebel 5 liegenden Punkt 30 angeordnet. Bei Verwendung von Hydraulikantrieben für die Hub- und Horizontalbewegung ist der Ausgleichszylinder 28 an die diesen Hydraulikantrieben zugeordnete Speicherhydraulik angeschlossen.

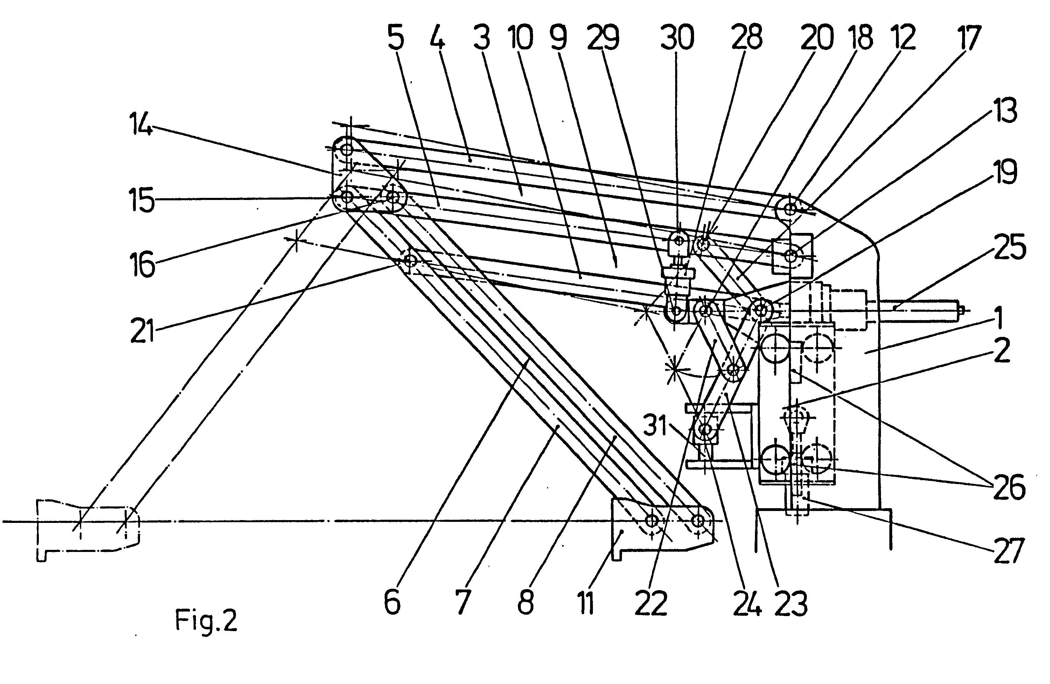

Um den Werkzeugträger 11 aus der in Fig. 1 gezeigten Stellung in die Stellung gemäß Fig. 2 zu bringen, wird der Horizontalantrieb 25 nach rechts verfahren. Dabei wird der Punkt 19, in dem der Horizontalantrieb 25, das Antriebsparallelogramm 9 und der Lenker 22 des Führungsgestänges miteinander gekoppelt sind, nach rechts bewegt. In der Folge wird das Hebelparallelogramm 3 etwas steiler gestellt und das Hebelparallelogramm 6 in Richtung auf den Grundrahmen 1 abgewinkelt. Während der Bewegung sorgt das Führungsgestänge aus den Lenkern 22, 23 in Verbindung mit der Vertikalführung 31 dafür, daß der Werkzeugträger 11 eine exakte Horizontalbewegung beschreibt.

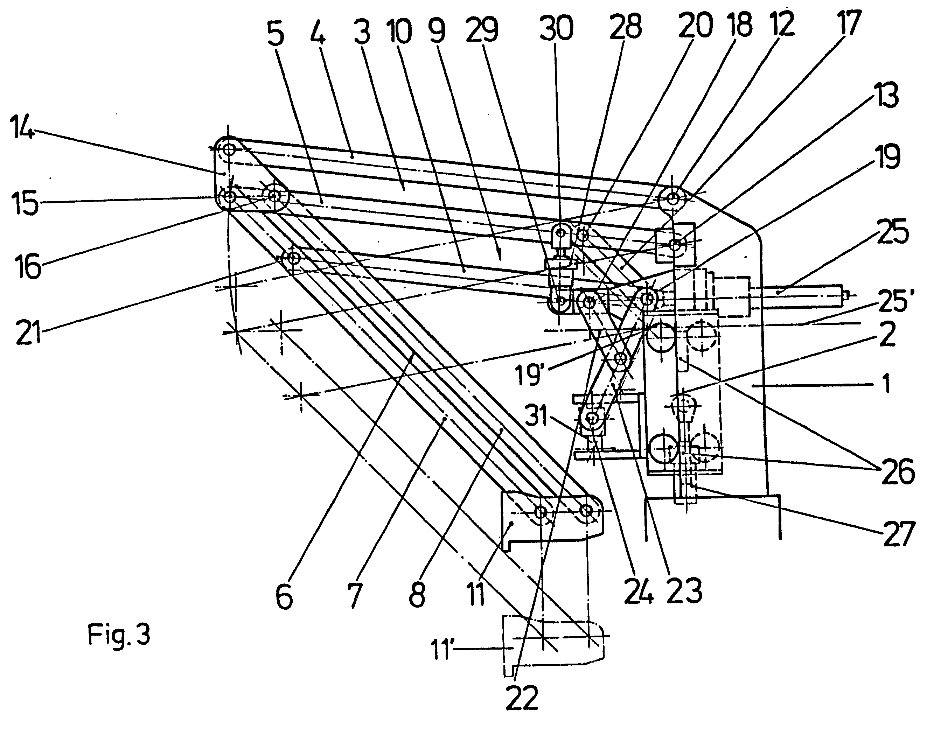

Die vertikale Verstellung des Werkzeugträgers 11 in die abgesenkte Stellung 11 ist aus der Fig. 3 zu ersehen. Dazu wird durch eine Beaufschlagung des Hubantriebs 27 der Kreuzschlitten 2 entlang der linearen vertikalen Rollenführung 26 soweit abgesenkt, daß sich der Horizontalantrieb 25 in der Höhe 25' und damit der Punkt 19 in der Lage 19' befinden. Da die Punkte 12, 13 des Hebelparallelogramms 3 durch ihre ortsfeste Anordnung auf dem Grundrahmen 1 ihre Lage nicht verändern können, wird das Hebelparallelogramm 3 nach unten geschwenkt. Dabei verändern das aus den Lenkern 22, 23 bestehende Doppellenkergestänge und das zweite Hebelparallelogramm 6 ihre Neigung im Raum nicht, so daß der Werkzeugträger 11 eine exakte Vertikalbewegung ausführt.

**Patentansprüche**

1. Vorrichtung zur Erzeugung von kartesischen Horizontal- und Vertikalbewegungen bei Handhabungsgeräten, Robotern und Chargiermanipulatoren mit Hilfe eines Knickarmsystems aus zwei hintereinander angeordneten Hebelparallelogrammen (3, 6) und einem Antriebsparallelogramm (9), die nach dem Pantographenprinzip angeordnet sind, wobei der Antrieb aus einem Kreuzschlitten (2) besteht, der als Horizontalführung ein Doppellenkergestänge (22, 23) und als Vertikalführung ein Linearführungssystem aufweist.

2. Vorrichtung nach Anspruch 1, dadurch gekennzeichnet, daß das Doppellenkergestänge (22, 23) aus zwei in einem Gelenk miteinander verbundenen Lenkern (22, 23) besteht, von denen einer mit einem Ende mit dem Kreuzschlitten (2) verbunden ist, daß das eine Ende des anderen Lenkers (23) mit einem auf dem Kreuzschlitten (2) angeordneten Horizontalantrieb (25) und dem Antriebsparallelogramm (9) verbunden ist und daß das andere Ende dieses Lenkers (23) in einer Vertikalführung (31) am Kreuzschlitten (2) geführt ist.

3. Vorrichtung nach den Ansprüchen 1 und 2 dadurch gekennzeichnet, daß das vertikale Linearführungssystem des Kreuzschlittens (2) und zwei der Gelenkpunkte (12, 13) des ersten Hebelparallelogramms (3) auf einem Grundrahmen (1) vorgesehen sind.

4. Vorrichtungen nach einem oder mehreren der Ansprüche 1 bis 3, dadurch gekennzeichnet, daß das vertikale Linearführungssystem eine Gleit- oder Rollenführung (26) umfaßt.

**Claims**

1. Device for the generation of Cartesian horizontal and vertical movements in manipulator devices, robots and charging manipulators with the aid of a crank arm system of two lever parallelograms (3, 6), arranged one behind the other and a drive parallelogram (9), which are arranged on the pantograph principle, wherein the drive consists of a cross slide (2), which displays a double guide rod linkage (22, 23) as horizontal guide and a linear guide system as vertical guide.

2. Device according to claim 1, characterised thereby, that the double guide rod linkage (22, 23) consists of two guide rods (22, 23), which are connected one with the other in a hinge and of which one is connected by one end with the cross lide (2), that the one end of the other guide rod (23) is connected with a horizontal drive (25) arranged on the cross slide (2) and with the drive parallelogram (9) and that the other end of this guide rod (23) is guided in a vertical guide (31) at the cross lide (2).

3. Device according to the claims 1 and 2, characterised thereby, that the vertical linear guide system of the cross slide (2) and two of the hinge points (12, 13) of the first lever parallelogram (3) are provided on a base frame (1).

4. Device according to one or more of the claims 1 to 3, characterised thereby, that the vertical linear guide system comprises a slide or roller guide (26).

**Revendications**

1. Dispositif destiné à produire des mouvements cartésiens horizontaux et verticaux sur des engins de manutention, des robots et des manipulateurs-chargeurs à l'aide d'un système à bras articulé composé de deux parallélogrammes (3, 6) de leviers disposés l'un derrière l'autre et un parallélogramme (9) d'entraînement, lesdits parallèlogrammes étant disposés selon le principe du pantographe, l'entraînement étant constitué d'un chariot (2) à mouvements croisés qui présente, pour servir de guidage horizontal, une tringlerie à deux tiges (22, 23) et pour servir de guidage vertical un système de quidage linéaire.

2. Dispositif selon la revendication 1, caractérisé par le fait que la tringlerie à deux tiges (22, 23) est constituée de deux tiges (22, 23) reliées l'une à l'autre dans une articulation, dont l'une est reliée par une extrémité au chariot (2), par le fait qu'une extrémité de l'autre tige (23) est reliée à un entraînement horizontal (25) disposé sur le chariot (2) et avec le parallélogramme d'entraînement (9) et par le fait que l'autre extrémité de ladite tige (23) se déplace dans un guidage vertical (31) sur le chariot (2).

3. Dispositif selon les revendications 1 et 2, caractérisé par le fait que le système de guidage linéaire vertical du chariot (2) et deux des points d'articulation (12, 13) du premier parallélogramme (3) sont prévus sur un châssis de base (1).

4. Dispositif selon l'une ou plusieurs des revendications 1 à 3, caractérisé par le fait que le système de guidage linéaire vertical comprend un guidage coulissant ou à rouleaux (26).

0 181 490

Fig.1

Fig.2

0 181 490

Fig. 3